# EUROPEAN PATENT SPECIFICATION

(11) **EP 2 398 710 B1**
(45) Date of publication and mention of the grant of the patent: **14.01.2015**
(21) Application number: 10704222.8
(22) Date of filing: 15.02.2010
(51) Int. Cl.: B65B 23/06, B65B 57/00, B65D 85/32, A01K 43/06

(54) **DEVICE FOR PROCESSING PRODUCTS, IN PARTICULAR EGGS, PRODUCT HOLDER AND IDENTIFICATION ELEMENT**
VORRICHTUNG ZUR VERARBEITUNG VON PRODUKTEN, INSBESONDERE EIERN, PRODUKTHALTER UND IDENTIFIKATIONSELEMENT
DISPOSITIF PERMETTANT DE TRAITER DES PRODUITS, EN PARTICULIER DES OEUFS, SUPPORT DES PRODUITS ET ÉLÉMENTS D'IDENTIFICATION DES PRODUITS

(30) Priority: 17.02.2009 NL 2002539
(43) Date of publication of application: 28.12.2011
(73) Proprietor: Beekhuis Computer Solutions B.V., 3956 CW Leersum (NL)
(72) Inventor: STEGEMAN, Andries, NL-3953 MB Maarsbergen (NL); SUNTJENS, Johannes, Marinus, NL-6042 LM Roermond (NL); BEEKHUIS, Job, NL-3921 AH Elst (NL)
(74) Representative: Jilderda, Anne Ayolt
(86) International application number: PCT/NL2010/050073
(87) International publication number: WO 2010/095935

(56) References cited:
- EP-A- 1 346 923
- EP-A- 1 911 690
- DE-A1- 19 917 114
- GB-A- 2 154 988
- US-A- 3 792 784
- US-A1- 2006 125 640
- US-B1- 6 483 434

## Description

The present invention relates to a device for processing products, particularly eggs, comprising a collection of holders with products and a feed station intended and adapted to receive holders with products from said collection of holders with products, and comprising a processing station intended and adapted to release products from said holders with products and to process them, which processing station is provided with input means for obtaining an identification associated with the collection of holders with products. The invention also relates to a product holder, particularly for eggs, and an identification element.

The collection of products is thus presented as initial packaging, for instance in the form of a pallet with a number of stacks of holders having therein the individual products such as eggs. The holders with products are fed individually into the feed station and the products are usually released therefrom fully automatically so that the products can subsequently be further processed individually, for instance washed, inspected, sorted and/or re-packaged. Such a processing takes place particularly in the case of agricultural products, such as eggs in particular. The products are supplied here by a producer in a bulk packaging and, optionally sorted according to for instance size, colour or weight, re-packaged in a retail packaging or a wholesale packaging. This not infrequently involves successive bulk packagings from different batches or even from different suppliers whose products are distributed over different target packages. Products from different initial packagings can thus end up in the same target package, and it will also be possible to discharge different target packages combined in the same batch.

Particularly in the case of food products, demands are increasingly being made in respect of traceability of individual products. If an infected, contaminated or otherwise inferior product is encountered somewhere in a food chain, it is of great importance to localize all other suspect products rapidly and precisely so as to still be able to withdraw them if possible from the market. It must be possible for this purpose to determine, on the basis of an individual product, from which initial packaging the product in question came, referred to hereinbelow as upward traceability. In respect of the products from thus traced initial packaging, it must then be possible to find out in which other target packages these have ended up, referred to hereinbelow as downward traceability. The origin of the products must therefore be known during the processing so that this origin can be added to a target package, usually in coded form. On the basis of this coding it is always possible to later ascertain very accurately and in a short time an initial batch associated with a target package, so that action can be taken quickly and efficiently in respect of the other target packages from the same initial packaging.

From an efficiency viewpoint the entire processing of the products takes place as far as possible in fully automated and mechanized manner. It is particularly desirable here that the holders with products are carried into the feed station and presented to the processing station wholly automatically. This means that the identification associated with the initial packaging must preferably also be supplied wholly automatically to the processing station, irrespective of the nature and manufacturer of the feed station, the processing station and possible intermediate parts of a processing line. This is not provided for in the present set-up for processing products as specified above, particularly in the processing of eggs.

The present invention has for its object, among others, to provide a device of the type stated in the preamble, whereby an unambiguous origin identification of the products for processing is also always possible in a fully automated production environment within the processing station.

In order to achieve the stated object a device of the type described in the opneing paragraph, according to the invention, is characterized in that the input means comprise electronic registration means which are able and adapted to electronically register an identification element which can be is associated with said collection of holders with products, in that at least one holder from the collection of holders with products comprises such an identification element, in that the holders comprise at least one series of successively provided product locations, in that said product locations comprise a recess per product location for partially receiving a product and product spaces located above the recesses maintain a line of sight relative to each other inside the holder, in that the identification element comprises a part situated in the line of sight, in that the holder comprises a longitudinal side extending in a direction of the line of sight and a front side transversely thereof, in that the identification element comprises a shield on the front side of the holder, and in that the identification element also extends on the longitudinal side of the holder and is electronically readable at that location.

The at least one holder thus carries with it an identification of the initial collection which can be read electronically in the processing station. An electronic coupling of different components of a processing line, such as particularly a coupling between the feed station and the processing station, is not necessary for this purpose. The processing station automatically recognizes the registration of a new identification which can then be issued to initial products or their packaging. The invention hereby provides a solution which is both simple and efficient for reliable upward and downward traceability of products in a fully, or at least largely automated processing environment.

It is noted that it is in itself known from the prior art to provide individual product holders with electronically readable identification means. As such US patent application 2006/0125640 describes to provide a box, containing a product, with a self adhering label which carries a RFID tag that can be interrogated by means of an RF signal sent by a transponder unit. As another example, British patent application GB 2.154.988 describes a holder with product locations, comprising eggs, which is provided at an edge with an optically readable bar code. None of these documents, however, provides a solution to trace and track product holders with products, emerging from a fully automated production environment, the way as suggested by the present invention.

The identification element can be per se connected permanently or semi-permanently to the holder in various ways. For this purpose a preferred embodiment of the device according to the invention has the feature that the at least one holder comprises at least a part of snap means, and that the identification element is able and adapted to co-act with the snap means in order to at least temporarily form a reliable mutual snap connection. A particular embodiment of the invention is characterized here according to the invention in that the snap means comprises a set of snap openings in the holder and that the identification element is provided with snap members fitting therein. The identification element can thus be snapped onto or on a holder from the collection and be removed again just as easily after use. By feeding the relevant container first into the device the identification element will, upon arrival at the processing station, then be recognized by the registration means provided there, this subsequently indicating the origin of the products of the whole collection.

In order to avoid the identification element of the holder equipped therewith being lost after processing, the device according to the invention has the feature that the holders comprise at least one series of successively provided product locations, wherein a recess is provided per product location for partially receiving a product, and product spaces located above the recesses maintain a line of sight relative to each other inside the holder, and that the identification element comprises a part situated in the line of sight. This is based on the insight that a processing line for products not infrequently comprises monitoring means for the purpose of monitoring an emptied product holder for products unintentionally left behind. For this purpose the holder is then automatically inspected mechanically or optically along the line of sight. The presence of said part of the identification element in this same line of sight suggests the presence of a product that has been left behind, and in such a set-up will trigger the monitoring means that are present.

The device according to the invention further has the feature that the holder comprises a longitudinal side extending in a direction of the line of sight and a front side transversely thereof, that the identification element comprises a shield on the front side of the holder and that the identification element also extends on the longitudinal side of the holder and is electronically readable at that location. The shield thus provides on the front side a desired simulation of a product that has been left behind, while the identification element remains visible and readable on the longitudinal side.

Identification elements of diverse nature are per se suitable within the scope of the invention. A further particular embodiment of the device according to the invention which can in particular be generally applied in and fitted into an existing automation environment is in this respect one which is characterized in that the identification element comprises a barcode which is printed thereon and can be electronically read in optical manner. The scanning and recognition of such barcodes is a tested identification method and can therefore be practically applied within the scope of the invention. A further preferred embodiment of the device according to the invention has the feature here that the identification element comprises an electromagnetically detectable transponder element which can be identified in radiographic manner. Such a transponder element can be read remotely without needing to be visible. A barcode and a transponder element can here optionally be combined in the identification element so that they can be applied within existing and future processing lines. The barcode and possible accompanying text here moreover allows the option of a human visual inspection to be retained.

The invention also relates to a holder for applying in the above described device according to the invention, wherein the holder is provided with an identification element. A particular embodiment of the holder according to the invention is characterized here in that the holder is adapted and intended to comprise eggs and is wholly manufactured from a durable, relatively form-retaining plastic. This material provides on the one hand the possibility of reusing the holder, while it can moreover be given a sufficiently form-retaining and dimensionally stable form to be suitable for mechanized handling. The holders with eggs can thus be removed from the collection using an automatic robot, and manual work is no longer necessary here.

A particular embodiment of the holder according to the invention has the feature here that the identification element is connected in manually releasable manner thereto by means of a snap connection. The identification element can thus be snapped temporarily onto a holder and removed again after processing of the holder with products. The identification element can here bear a visible barcode which can be read optically and/or optionally comprise a transponder element which is electromagnetically detectable. A further particular embodiment of the holder according to the invention has the feature that the identification element comprises an electromagnetically detectable transponder element integrated into a wall of the holder. The identification element is thus connected non-releasably to the holder and each thus embodied holder is unique or identifiable relative to each other in a collection.

The invention also relates to an identification element which can be applied with the holder according to the invention, and will now be further elucidated on the basis of an exemplary embodiment and an accompanying drawing. In the drawing:
- figure 1: shows a schematic representation of an exemplary embodiment of a device according to the invention;
- figure 2A: shows an exemplary embodiment of a holder according to the invention on a longitudinal side thereof;
- figure 2B: shows an exemplary embodiment of a holder according to the invention on a front side thereof; and
- figure 3: is a perspective view of an identification element as applied in the device and holder of figures 1 and 2.

It is noted here that the drawing is schematic and not drawn to scale. Some dimensions in particular may be shown larger or smaller for the sake of clarity. Corresponding parts are designated as far as possible in the figures with the same reference numeral.

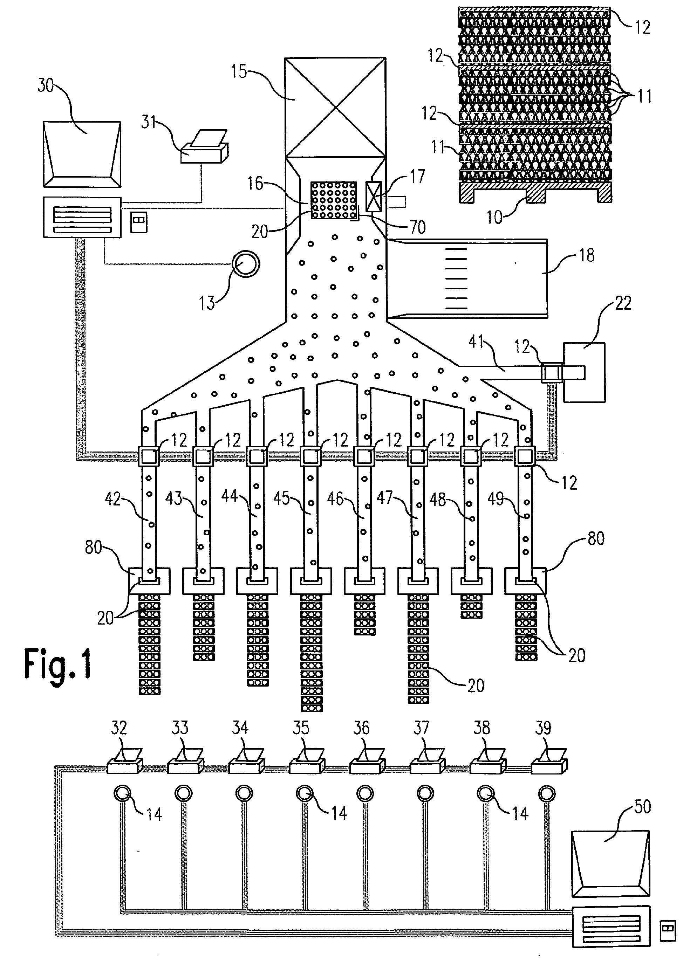

The schematic representation of figure 1 shows a device for re-packaging products from an initial packaging to one or more target packages. This embodiment relates to a device for re-packaging eggs. The eggs are supplied on pallets 10 and are situated in individual product holders in the form of trays 11 of six by five eggs. Trays 11 are mutually stacked up to six high and will later be presented one by one to a processing station adapted thereto.

Pallets 10 are divided by divider partitions 12 into levels of six trays high and stacks of three by four. Each level thus comprises space for 3x4x6x30=2160 eggs. It is possible to build to a height of five or six levels per pallet 10 so that a pallet can comprise up to 10,000-13,000 eggs overall. The device described below is intended for the purpose of re-packaging these eggs from such a wholesale packaging as initial packaging and sorting them to size into smaller cardboard retail packagings 20 of four, six, ten or twelve eggs in accordance with a specific order.

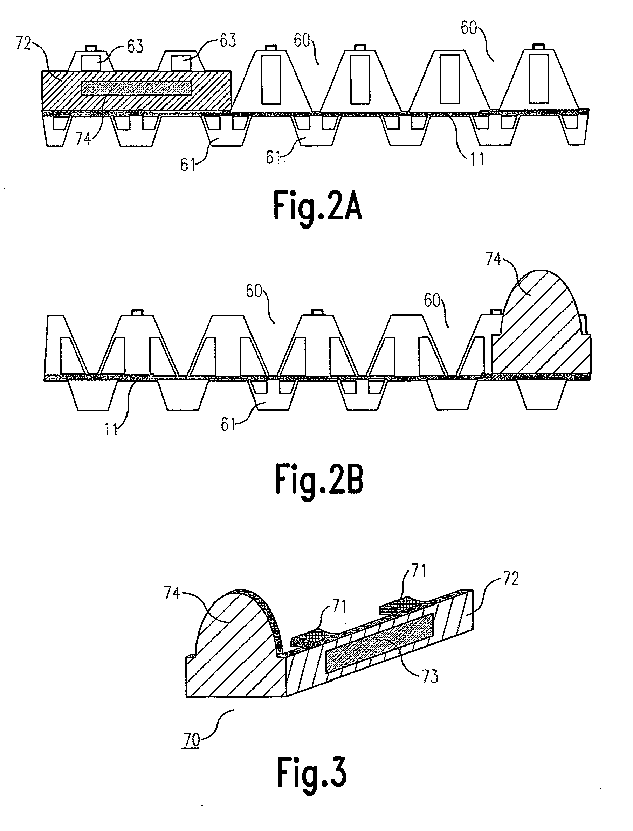

Trays 11, each for thirty eggs, are further shown in figures 2A and 2B and are manufactured from a relatively form-retaining, durable plastic such as polyethylene or polypropylene. Such trays 11 provide the option of being picked up and placed in fully automatic manner without human intervention being necessary for the purpose. The eggs lie in a matrix of five by six individual product racks 60 or pockets for one egg at a time. An egg here descends partially into a recess 61 provided in this position. The product spaces present above recesses 61 lie one straight after the other and transpose into each other so that a line of sight is present therebetween.

According to the invention at least a first of the trays 11 of a pallet 10 is provided with an identification element 70, for instance in the form as shown in figure 3. For fastening purposes identification element 70 comprises two snap members 71 which are received clampingly and snap into snap openings or snap cavities 63 in tray 11. Upon arrival such an identification element 70 is snapped onto a top tray 11 or holder of the initial packaging at a corner point such that this product holder will be fed in first. Identification element 70 comprises a longitudinal part 72 on a longitudinal side of the tray, see figure 2A, which is provided with an electronically readable identification code which indicates an origin of pallet 10. In this example there is an optically readable barcode, which is printed via a self-adhesive carrier 73 provided for this purpose, as well as an electromagnetically detectable transponder, a so-called RFID, which can be registered in radiographic manner and is embedded and incorporated in optically invisible manner in the material of element 70. Identification element 70 is thus electronically detectable and readable in different ways.

Identification element 70 also comprises a part on a front side of tray 11, see figure 2B, which is situated in the line of sight through the product spaces. Identification element 70 thus simulates the presence of an egg, which will be advantageous at a later stage. In this example the relevant part 74 is embodied as a shield in the form of an egg, although another design can optionally be chosen instead.

The device comprises a feed station 15 equipped with a so-called de-palletizer. This is a fully automated robot which can lift a stack of six trays 11 with eggs at a time and then present the trays one by one to a processing station 16, optionally via a conveyor belt. The processing station comprises electronic registration means 17 along which trays 11 pass. As soon as a tray 11 with an identification element passes, the identification code incorporated therein will be detected and read by the registration means. In this example registration means 17 comprise an optical barcode scanner, although an RFID scanner or other electronic identification elements can also be utilized within the scope of the invention. The origin of the eggs in question and of the other eggs from the same collection is hereby known in a central computer system. Until an identification element is detected which is associated in the system with another collection, the passing trays can be deemed as coming from the same collection.

In order to release the eggs from their trays the processing station comprises fully automatic pick-up means (not further shown) in the form of a matrix of six by five suction nozzles which pick up a corresponding group of six by five eggs at a time from a tray and place it on a conveyor belt. The thus emptied trays 11 are discharged via an inspection and monitoring station 18 provided for this purpose. A tray in which an egg has remained behind is here detected and carried away to the side. The other trays leave the device, are discharged and possibly reused. The detection of an unintentionally remaining egg takes place in this station by mechanically or optically testing the trays for a barrier along the line of sight. Because front part 74 of identification element 70 is situated in this line of sight, the holder equipped therewith will thus be automatically selected from the other trays 11 so that the identification element is not lost without this being noticed.

Each initial packaging is eventually uniquely identified by means of the identification element associated therewith and is registered in a database which is managed by, or at least from, a computer system 30. For every initial packaging a record is made therein with the unique identification of the relevant package, referred to below as the IP number, supplemented with data relating to the content and origin such as for instance the supplier/producer, the house number of the chickens, the laying date, the type of egg and the average weight. These data are carefully recorded in the database and printed by means of a printer 31 provided for this purpose onto a self-adhesive label which is adhered to the initial packaging. The unique IP number is herein printed not only alphanumerically but also as barcode so as to be electronically readable in easy and reliable manner later in the process.

After being removed from the trays, the eggs are transported further and distributed over a number of discharge channels 41..49. A counter 12 is arranged per discharge channel 41..49. Counters 12 are coupled to resetting means in the form of a computer system 30, to which registration means 17 are also coupled. This ensures that the counter readings of counters 12 are set to zero each time an initial packaging is replaced. This latter is perceived by the system in that the registration means register an identification element 70 associated with a following initial packaging 10. At that moment a processing date and time are also coupled to the IP number of the initial packaging to be processed. A manual zero setting is likewise possible by means of a push-button 13. Per initial packaging is thus recorded exactly how many eggs originated therefrom, how they are processed over the different discharge lines in the device and at which moment in time this takes place. This information is stored with the database data of the relevant initial batch. The IP number of the relevant packaging is for instance read electronically on the basis of the barcode which is printed on the label thereof, but can also be registered in other manner.

In this embodiment the device is provided with sorting means for the supplied eggs. The eggs are first of all subjected to a visual inspection, wherein eggs with breakage or other flaws are discharged via a first discharge channel 41 and discharge means into a first discharge packaging 21. The thus discarded eggs are for instance processed as raw material in the food processing industry. The remaining eggs are sorted according to size, making use of sorting means which are conventional and therefore not further shown, and distributed according to size over different discharge channels 42..49. Situated at the end of each discharge channel 42..49 are discharge means 80 for receiving a target package 20 and for delivery of the supplied eggs therein. These are for instance target packages in the form of cardboard or plastic boxes for 4, 6, 10, 12 or 30 eggs in accordance with the wishes of the customer.

The device also comprises an end station in the form of a further computer system 50 which is likewise coupled to the above mentioned database. Every target package 20 can hereby be registered and identified. In this embodiment there is assigned to each target package 20 an identification code which is unique for the batch to which the target package belongs, referred to below as the EPP code. For every batch there is held in the database a record which includes this unique identification code, customer data and optionally an article number and other data relating to the nature of the eggs, such as weight, colour and packaging.

In this embodiment a printer unit 32..39 is provided per discharge line 42..49 to enable every target package to be provided with a label once it has been fully filled. A push-button 14 at each discharge line enables an operator to obtain a label. On the label is given the EPP code together with the current time and date of packaging and an identification of the discharge line used. Printers 32..39 are controlled from a shared computer system 50. If one of the printers is not operational due to a malfunction or for another reason, this computer system 50 automatically selects another printer to print the label, so that operation of the device can continue without disruption. Such a collective control also provides the option, if desired, of sufficing with fewer printers than discharge lines. The push-button 14 used 'tells' the system for which discharge line the label is intended.

The retail packages 20 are in turn packed into boxes. This can take place manually or automatically. Although each retail package can be provided with the label obtained via one of the printers 32..39 or a printer specifically designed for the purpose, it is found sufficient in practice to provide every such box with a label.

Should a retail package with a contaminated or infected egg be found later in the further progression through the food chain, all eggs which originate from the same initial packaging, and which are therefore suspect, can be traced on the basis of the moment of packaging which can be read from the label and the EPP code. The time and date of packing leads in any case to the IP code of the initial packaging which was being processed at that moment in the relevant discharge line. Owing to the recorded counter readings of counters 12 it is known precisely of this initial batch over which discharge lines the eggs therefrom were discharged, wherein the associated EPP codes can be checked. The customers associated with these EPP codes can then be informed immediately of the suspect consignment, so that they can immediately remove from the food chain the target packages with the EPP code in question.

The invention thus provides an effective upward and downward traceability which, in the case of an infected, contaminated or otherwise suspect batch of eggs, can limit the damage to just this initial batch.

Although the invention has been further elucidated with reference to only a single exemplary embodiment, it will be apparent that the invention is by no means limited thereto. On the contrary, many variations and embodiments are still possible for a person with ordinary skill in the art within the scope of the invention.

## Claims

1. Device for processing products, particularly eggs, comprising a collection (10) of holders (11) with products and a feed station (15) intended and adapted to receive holders (11) with products from said collection (10) of holders with products, and comprising a processing station (16) intended and adapted to release products from said holders with products and to process them, which processing station is provided with input means (17) for obtaining an identification associated with the collection of holders with products, **characterized in that** the input means comprise electronic registration means which are able and adapted to electronically register an identification element (70) which is associated with said collection of holders with products, **in that** at least one holder from the collection of holders with products comprises such an identification element, **in that** the holders comprise at least one series of successively provided product locations (60), **in that** said product locations comprise a recess (61) per product location for partially receiving a product and product spaces located above the recesses maintain a line of sight relative to each other inside the holder, **in that** the identification element (70) comprises a part (74) situated in the line of sight, **in that** the holder comprises a longitudinal side extending in a direction of the line of sight and a front side transversely thereof, **in that** the identification element comprises a shield on the front side of the holder, and **in that** the identification element (72,73) also extends on the longitudinal side of the holder and is electronically readable at that location.

2. Device as claimed in claim 1, **characterized in that** the at least one holder comprises at least a part of snap means (63), and that the identification element is able and adapted to co-act with the snap means in order to at least temporarily form a reliable mutual snap connection.

3. Device as claimed in claim 2, **characterized in that** the snap means comprises a set of snap openings (63) in the holder and that the identification element is provided with snap members (71) fitting therein.

4. Device as claimed in one or more of the preceding claims, **characterized in that** the identification element comprises a bar code which is printed thereon and can be electronically read in optical manner.

5. Device as claimed in one or more of the preceding claims, **characterized in that** the identification element comprises an electromagnetically detectable transponder element which can be identified in radiographic manner.

6. Holder provided with a number of product locations and an identification element, for use with the device as claimed in one or more of the preceding claims, **characterized in that** said holder comprises a recess (61) per product location for partially receiving a product, **in that** product spaces located above the recesses maintain a line of sight relative to each other, **in that** the identification element (70) comprises a part (74) situated in the line of sight, **in that** the holder comprises a longitudinal side extending in a direction of the line of sight and a front side transversely thereof, **in that** the identification element comprises a shield on the front side, and **in that** the identification element (72,73) also extends on the longitudinal side to be electronically readable at that location.

7. Holder as claimed in claim 6, **characterized in that** the holder is adapted and intended to comprise eggs and is wholly manufactured from a durable plastic.

8. Holder as claimed in claim 7, **characterized in that** the identification element is connected in manually releasable manner to the holder by means of a snap connection (71,63).

9. Holder as claimed in claim 8, **characterized in that** the snap connection comprises a set of snap openings (63) in the holder and that the identification element is provided with snap members (71) fitting in said snap openings (63).

10. Holder as claimed in claim 9, **characterized in that** the identification element comprises an electromagnetically detectable transponder element integrated into the material of the identification element.

11. Identification element for use with the holder as claimed in claim 9 or 10 **characterized by** snap members fitting in snap openings of said holder, by a shield configured to be in a line of sight on a front side of said holder, by a longitudinal portion, configured to extend along a longitudinal side of the holder, and by being electronically readable at the longitudinal side of the holder.

## Patentansprüche

1. Vorrichtung zum Handhaben von Produkten, insbesondere Eiern, umfassend eine Sammlung (10) von Trägern (11) mit Produkten und einer Zufuhrstation (15), vorgesehen und gestaltet zum Aufnehmen der Halter (11) mit Produkten aus der Sammlung (10) von Haltern mit Produkten, umfassend eine Handhabungsstation (16), vorgesehen und gestaltet zum Freigeben der Produkte von den Trägern mit Produkten und zu deren Handhabung; die Handhabungsstation ist versehen mit einer Eingabeeinrichtung (17) zum Erhalten einer Identifikation, zugeordnet der Sammlung von Haltern mit Produkten, **dadurch gekennzeichnet, dass** die Eingabeeinrichtung eine elektronische Registriereinrichtung umfasst, geeignet und gestaltet zum elektronischen Registrieren eines Identifikationselementes (70), das der Sammlung von Haltern mit Produkten zugeordnet ist, dass wenigstens ein Halter aus der Sammlung von Haltern mit Produkten ein Identifikationselement aufweist, dass die Halter wenigstens eine Reihe von nacheinander angeordneten Produktstationen (60) umfasst, dass die Produktstationen eine Aussparung (61) pro Produktstation umfassen zum teilweisen Aufnehmen eines Produktes, dass Produkträume oberhalb der Aussparungen eine Sichtlinie relativ zueinander innerhalb des Halters aufrechterhalten, dass das Identifikationselement (70) ein Teil (74) oberhalb der Sichtlinie umfasst, dass der Halter eine Längsseite aufweist, die sich in einer Richtung der Sichtlinie erstreckt, und eine Frontseite quer hierzu, dass das Identifikationselement ein Schild auf der Frontseite des Halters umfasst, und dass das Identifikationselement (72, 73) sich auch auf der Längsseite des Halters erstreckt und an dieser Stelle elektronisch lesbar ist.

2. Vorrichtung nach Anspruch 1, **dadurch gekennzeichnet, dass** der wenigstens eine Träger wenigstens ein Teil einer Schnappeinrichtung (63) umfasst, und dass das Identifikationselement geeignet und gestaltet ist, um mit der Schnappeinrichtung zusammenzuarbeiten, um wenigstens vorübergehend eine zuverlässige gegenseitige Schnappverbindung herzustellen.

3. Vorrichtung nach Anspruch 2, **dadurch gekennzeichnet, dass** die Schnappeinrichtung einen Satz von Schnappöffnungen (63) im Halter aufweist, und dass das Identifikationselement mit hierin angeordneten Schnappeinrichtungen (71) versehen ist.

4. Vorrichtung nach einem oder mehreren der vorausgegangen Ansprüche, **dadurch gekennzeichnet, dass** das Identifikationselement einen Strichcode aufweist, der aufgedruckt ist und der sich elektronisch auf optische Weise lesen lässt.

5. Vorrichtung nach einem oder mehreren der vorausgegangen Ansprüche, **dadurch gekennzeichnet, dass** das Identifikationselement einen elektronisch erfassbaren Transponder umfasst, der radiografisch identifizierbar ist.

6. Halter, ausgestattet mit einer Anzahl von Produktstationen und einem Identifikationselement zur Anwendung bei einer Vorrichtung gemäß einem oder mehreren der vorausgegangenen Ansprüche, **dadurch gekennzeichnet, dass** der Halter eine Aussparung (61) pro Produktstation zum teilweisen Aufnehmen eines Produktes aufweist, dass die Produkträume oberhalb der Aussparung eine Sichtlinie relativ zueinander umfassen, dass das Identifikationselement (70) einen Teil (74) umfasst, der in der Sichtlinie angeordnet ist, dass der Halter eine Längsseite umfasst, die sich in Richtung der Sichtlinie erstreckt, und eine Frontseite quer hierzu, dass das Identifikationselement ein Schild auf der Frontseite umfasst, und dass das Identifikationselement (72, 73) sich auch auf der Längsseite erstreckt, um elektronisch an einer Station gelesen zu werden.

7. Halter nach Anspruch 6, **dadurch gekennzeichnet, dass** der Halter gestaltet und geeignet ist, Eier aufzunehmen, und vollständig aus einem dauerfesten Kunststoff hergestellt ist.

8. Halter nach Anspruch 7, **dadurch gekennzeichnet, dass** das Identifikationselement manuell lösbar an den Halter mittels einer Schnappverbindung (71, 63) angeschlossen ist.

9. Halter nach Anspruch 8, **dadurch gekennzeichnet, dass** die Schnappverbindung einen Satz von Schnappöffnungen (63) im Halter umfasst, und dass das Identifikationselement mit Schnappeinrichtungen (71) versehen ist, die in den Schnappöffnungen (63) angeordnet sind.

10. Halter nach Anspruch 9, **dadurch gekennzeichnet, dass** das Identifikationselement einen elektromagnetisch erfassbaren Transponder umfasst, integriert in das Material des Identifikationselementes.

11. Identifikationselement zur Anwendung bei einem Halter gemäß der Ansprüche 9 oder 10, **dadurch gekennzeichnet, dass** Schnappeinrichtungen in Schnappöffnungen des Halters vorgesehen sind mittels eines Schildes, konfiguriert, um in einer Sichtlinie auf einer Frontseite des Halters zu liegen, durch einen Längsabschnitt, der derart gestaltet ist, dass er sich entlang einer Längsseite des Halters erstreckt, und durch elektronische Ablesbarkeit auf der Längsseite des Halters.

## Revendications

1. Dispositif pour traiter des produits, en particulier des oeufs, comprenant une collection (10) de supports (11) avec des produits et un poste d'alimentation (15) prévu et adapté pour recevoir des supports (11) avec des produits de ladite collection (10) de supports avec des produits, et comprenant un poste de traitement (16) prévu et adapté pour libérer des produits desdits supports avec des produits et les traiter, lequel poste de traitement est prévu avec des moyens d'entrée (17) pour obtenir une identification associée à la collection de supports avec des produits, **caractérisé en ce que** les moyens d'entrée comprennent des moyens d'alignement électroniques qui sont capables et adaptés pour aligner électroniquement un élément d'identification (70) qui est associé à la collection de supports avec des produits, **en ce qu'**au moins un support de la collection de supports avec des produits comprend un tel élément d'identification, **en ce que** les supports comprennent au moins une série d'emplacements de produit (60) fournis successivement, **en ce que** lesdits emplacements de produit comprennent un évidement (61) par emplacement de produit pour recevoir partiellement un produit et des espaces de produit positionnés au-dessus des évidements maintiennent une ligne de visée les uns par rapport aux autres à l'intérieur du support, **en ce que** l'élément d'identification (70) comprend une partie (74) située dans la ligne de visée, **en ce que** le support comprend un côté longitudinal s'étendant dans une direction de la ligne de visée et un côté avant transversalement par rapport à cette dernière, **en ce que** l'élément d'identification comprend une protection sur le côté avant du support, et **en ce que** l'élément d'identification (72, 73) s'étend également sur le côté longitudinal du support et est lisible électroniquement à cet emplacement.

2. Dispositif selon la revendication 1, **caractérisé en ce que** le au moins un support comprend au moins une partie de moyens d'encliquetage (63) et **en ce que** l'élément d'identification est capable et adapté pour co-agir avec les moyens d'encliquetage afin de former au moins temporairement un raccordement d'encliquetage mutuel fiable.

3. Dispositif selon la revendication 2, **caractérisé en ce que** les moyens d'encliquetage comprennent un ensemble d'ouvertures d'encliquetage (63) dans le support et **en ce que** l'élément d'identification est prévu avec des éléments d'encliquetage (71) montés dans ce dernier.

4. Dispositif selon une ou plusieurs des revendications précédentes, **caractérisé en ce que** l'élément d'identification comprend un code barres qui est imprimé sur ce dernier et peut être lu électroniquement, de manière optique.

5. Dispositif selon une ou plusieurs des revendications précédentes, **caractérisé en ce que** l'élément d'identification comprend un élément de transpondeur électromagnétiquement détectable qui peut être identifié de manière radiographique.

6. Support prévu avec un certain nombre d'emplacements de produit et un élément d'identification, destiné à être utilisé avec le dispositif selon une ou plusieurs des revendications précédentes, **caractérisé en ce que** ledit support comprend un évidement (61) par emplacement de produit pour recevoir partiellement un produit, **en ce que** des espaces de produit positionnés au-dessus des évidements maintiennent une ligne de visée les uns par rapport aux autres, **en ce que** l'élément d'identification (70) comprend une partie (74) située dans la ligne de visée, **en ce que** le support comprend un côté longitudinal s'étendant dans une direction de la ligne de visée et un côté avant transversalement par rapport à cette dernière, **en ce que** l'élément d'identification comprend une protection sur le côté avant, et **en ce que** l'élément d'identification (72, 73) s'étend également sur le côté longitudinal pour pouvoir être lisible électroniquement à cet emplacement.

7. Support selon la revendication 6, **caractérisé en ce que** le support est adapté et prévu pour contenir des oeufs et est complètement fabriqué à partir d'un plastique durable.

8. Support selon la revendication 7, **caractérisé en ce que** l'élément d'identification est raccordé d'une manière manuellement amovible au support au moyen d'un raccordement d'encliquetage (71, 63).

9. Support selon la revendication 8, **caractérisé en ce que** le raccordement d'encliquetage comprend un ensemble d'ouvertures d'encliquetage (63) dans le support et **en ce que** l'élément d'identification est prévu avec des éléments d'encliquetage (71) qui s'adaptent dans lesdites ouvertures d'encliquetage (63).

10. Support selon la revendication 9, **caractérisé en ce que** l'élément d'identification comprend un élément de transpondeur électromagnétiquement détectable intégré dans le matériau de l'élément d'identification.

11. Elément d'identification destiné à être utilisé avec le support, selon la revendication 9 ou 10, **caractérisé par** des éléments d'encliquetage montés dans des ouvertures d'encliquetage dudit support, par une protection configurée pour être dans une ligne de visée sur un côté avant dudit support, par une partie longitudinale, configurée pour s'étendre le long d'un côté longitudinal du support et en étant électroniquement lisible au niveau du côté longitudinal du support.
